# EUROPEAN PATENT SPECIFICATION

(11) **EP 3 348 450 B1**
(45) Date of publication and mention of the grant of the patent: **10.07.2019**
(21) Application number: 18150021.6
(22) Date of filing: 02.01.2018
(51) Int. Cl.: B62D 1/184, B62D 1/189

(54) **STEERING COLUMN**
LENKSÄULE
COLONNE DE DIRECTION

(30) Priority: 12.01.2017 IT 201700002675
(43) Date of publication of application: 18.07.2018
(73) Proprietor: MMX - Meccanoplast S.R.L., 42124 Reggio Emilia (IT)
(72) Inventor: MAZZA, Leandro, 42122 REGGIO EMILIA (IT)
(74) Representative: Corradini, Corrado

(56) References cited:
- EP-A2- 1 923 297
- US-A- 5 439 252
- US-A1- 2005 183 534

## Description

### TECHNICAL FIELD

The present invention concerns a steering column for vehicles, for example for heavy and/or farming vehicles.

### PRIOR ART

Steering columns are known comprising a fixed base block to which an upper part is connected, from the upper end of which an upper portion of a steering axle projects associated with a steering wheel.

The upper part can for example be associated in a movable manner with respect to the base block with respect to at least two degrees of freedom, for example one rotational and the other translational, for the adjustment of the inclination and of the height of the steering wheel, respectively.

Such known steering columns can have one or more control members able to be operated singularly between a locked position, in which they constrain both of the degrees of freedom of the upper part with respect to the base block, and respective unlocked positions, in which they free one or both of the two degrees of freedom of the upper part with respect to the base block. For example, it is possible to simultaneously adjust the steering wheel in both functions (inclination and rotation) through a single control member that, once actuated, locks both of the movement or the separate adjustment of both of the movements respectively with distinct control members, for example two levers, a lever and a pedal or a lever and a button.

The adjustment of the inclination and of the rotation with a single control member able to be operated by the user is a preferred solution in some circumstances, but for shared vehicles in particular, i.e. vehicles driven by more than one user, for example used in shifts by different users, it is preferable for the possibility of the steering column - at the end of a shift - being able to be left in an unstable condition, i.e. in a configuration in which one of the two degrees of freedom is not locked, to be decreased to the minimum.

Indeed, the driver who, unknowingly, starts to drive a vehicle in which one of the two degrees of freedom is not locked would have to manage an unforeseen situation, for example at the first corner in travel conditions of the vehicle. Documents US2005/183534A1 and US5439252A show examples of prior art steering columns. Each one of these documents discloses the combination of the features of the preamble of claim 1.

A purpose of the present invention is to overcome the aforementioned drawbacks of the prior art, in a simple, rational and low-cost solution.

Such purposes are accomplished by the characteristics of the invention given in the independent claims. The dependent claims outline preferred and/or particularly advantageous aspects of the invention.

### SUMMARY OF THE INVENTION

The invention, particularly, provides a steering column comprising:
- a base block;
- an upper part connected to the base block, in which the upper part is movable with respect to the base block with respect to at least two degrees of freedom;
- an actuation lever connected to the upper part and operable between a locked position, in which the actuation lever is in stable equilibrium and constrains both of the degrees of freedom of the upper part with respect to the base block, and two distinct unlocked positions, in each of which it respectively frees one of the two degrees of freedom of the upper part with respect to the base block;
in which in one of the two unlocked positions the actuation lever is in an unstable position, in which the actuation lever is pushed by return means from the unstable position, in which it frees one of said degrees of freedom, towards a stable equilibrium position in which it constrains the same degree of freedom.

Thanks to such a solution, the (single) actuation lever, when not perturbed, always goes back into the equilibrium position with greater safety and comfort for the user.

For example, the return means can be elastic return means.

Thanks to such a solution the return means can be easily and cost-effectively made and are safe to use.

According to the invention, the actuation lever is rotatably connected with respect to the upper part with respect to a first oscillation axis and is operable in oscillation about the first oscillation axis alternately between two distinct angular positions distanced by a predetermined oscillation angle, a first angular position of which defines the locked position and a second angular position of which defines a first position of the two unlocked positions for a first degree of freedom, for example translational, of said due degrees of freedom.

Thanks to such a solution, the locking and unlocking of the first degree of freedom is practical and intuitive for the driver.

According to the invention, the actuation lever is rotatably connected with respect to the upper part with respect to a second oscillation axis and is operable in oscillation about the second oscillation axis alternately between two distinct angular positions, a first angular position of which defines the locked position and a second angular position of which defines the unstable position of the two unlocked positions for a second degree of freedom, for example rotational, of said two degrees of freedom.

Thanks to such a solution, the locking and unlocking of the second degree of freedom is practical and intuitive for the driver. According to the invention, the first oscillation axis and the second oscillation axis are inclined with respect to one another, for example perpendicular.

An aspect of the invention foresees, moreover, that an intermediate part can be arranged between the base block and the upper part, the upper part is slidably connected to the intermediate part defining a degree of translational freedom of the upper part with respect to the base block.

Advantageously, between the upper part and the intermediate part it is possible to arrange a friction locking group equipped with a control member able to be selectively actuated between a closed position, in which it stops the sliding of the upper part with respect to the intermediate part, and an open position, in which it frees the sliding of the upper part with respect to the intermediate part; moreover
the actuation lever can be connected to the control member for the actuation thereof selectively between the closed position and the open position, respectively in the locked position of the actuation lever and in a first position of the two unlocked positions thereof.

Thanks to such a solution, the locking and unlocking of the sliding of the upper part with respect to the intermediate part is particularly simple, convenient and intuitive for the driver.

Again for the same purposes illustrated above, the actuation lever can be rotatably connected to the upper part with respect to a first oscillation axis and can comprise a cam equipped with an eccentric profile with respect to the first oscillation axis and adapted for actuating the control member selectively between the closed position and the open position following an oscillation of the cam with respect to the first oscillation axis by a certain oscillation angle. A further aspect of the invention foresees that between the base block and the upper part it is possible to arrange the intermediate part, the intermediate part may able to be rotatably connected to the base block defining a degree of rotational freedom of the upper part with respect to the base block. Advantageously, the intermediate part can be hinged to the base block with respect to a rotation axis perpendicular to a sliding direction of the upper part with respect to the intermediate part.

Thanks to this, the steering wheel can be oriented and adjusted in height according to the requirements of the driver.

Preferably, between the intermediate part and the base block it is possible to connect a gas spring comprising:
- a cylinder, hinged to one from the base block and the intermediate part;
- a stem slidably connected to the cylinder and hinged to the other from the intermediate part and the base block; and
- a control element able to be selectively actuated between a stop position, in which it stops the sliding of the stem with respect to the cylinder, and an unlocked position, in which it frees the sliding of the stem with respect to the cylinder;
the actuation lever can be connected to the control element for the actuation thereof selectively between the stop position and the unlocked position, respectively in the locked position of the actuation lever and in the unstable position of the two unlocked positions thereof.

Thanks to such a solution, the locking and unlocking of the rotation of the intermediate part (and therefore of the upper part) with respect to the base block is particularly simple, convenient and intuitive for the driver.

Again for the same purposes illustrated above, the actuation lever can be rotatably connected to the upper part with respect to a second oscillation axis and comprises at least one eccentric portion with respect to the second oscillation axis to which the control element is connected through a traction cable, for the actuation of the control element selectively between the stop position and the unlocked position following an oscillation of the eccentric portion with respect to the second oscillation axis by a certain oscillation angle. Preferably, the traction cable can comprise a sheathed Bowden cable. Advantageously, the return means are integrated in the traction cable. Thanks to such a solution, the return means are made with the least number of components and have high simplicity of mounting and installation.

### BRIEF DESCRIPTION OF THE DRAWINGS

Further characteristics and advantages of the invention will become clear from reading the following description provided as a non-limiting example, with the help of the figures illustrated in the attached tables.

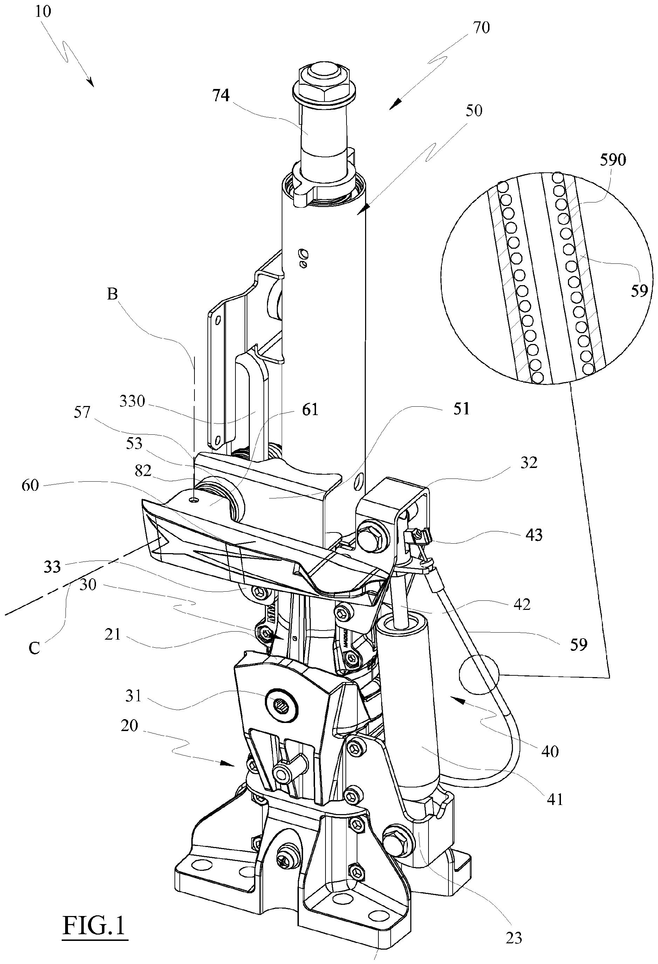

Figure 1 is a front-side axonometric view of a steering column according to the invention.

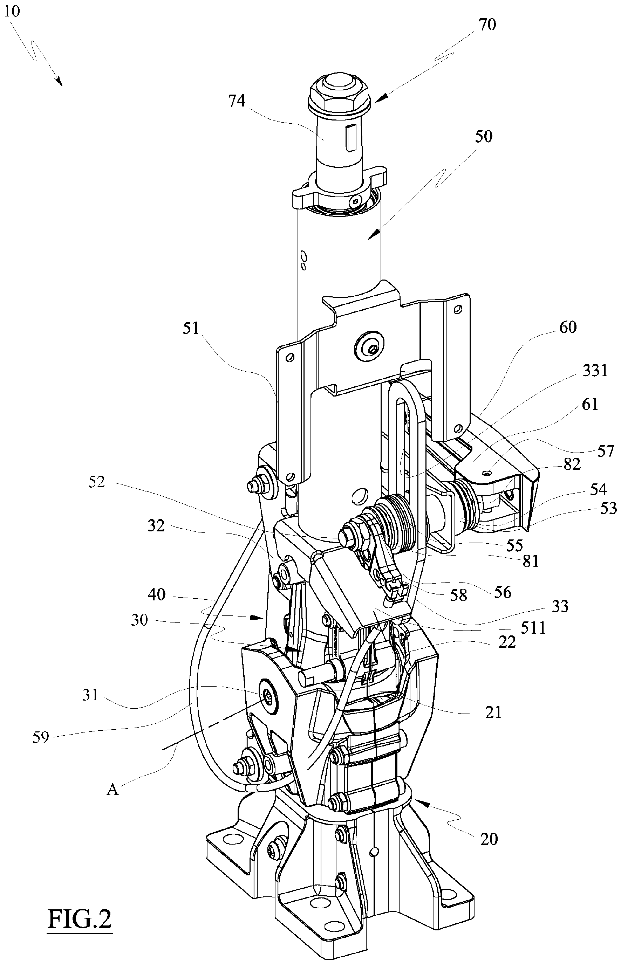

Figure 2 is a rear-side axonometric view of the steering column of figure 1.

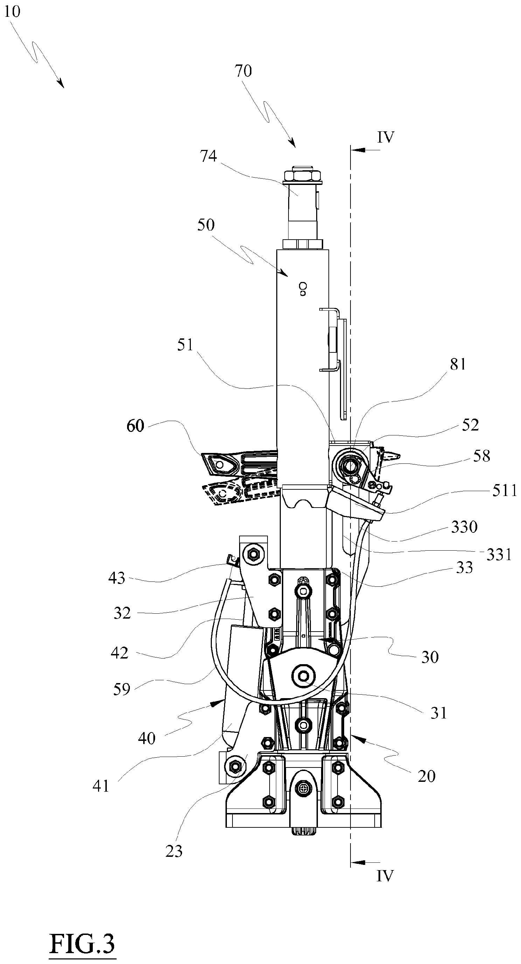

Figure 3 is a side view of figure 1.

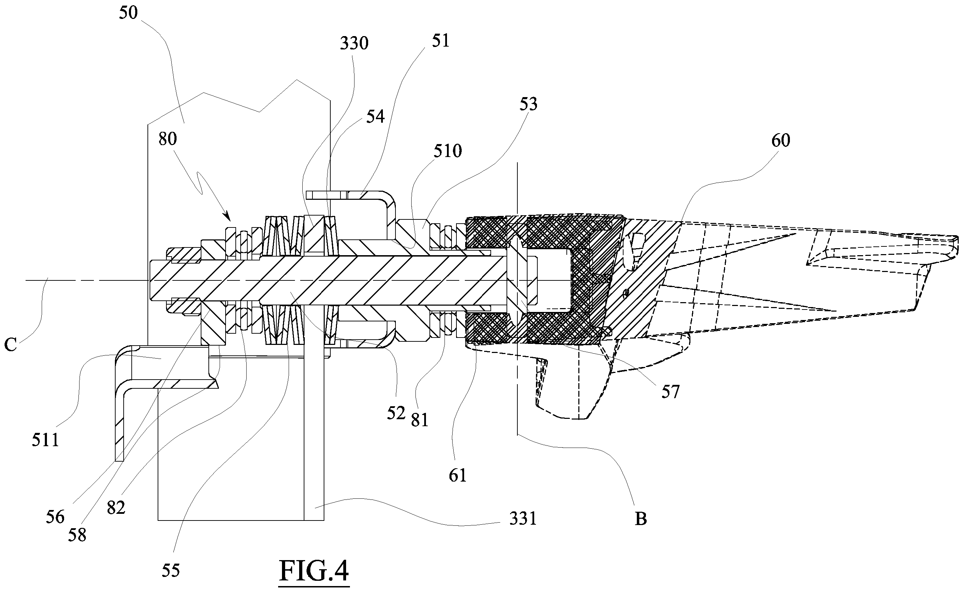

Figure 4 is a section view along the section line IV-IV of figure 3.

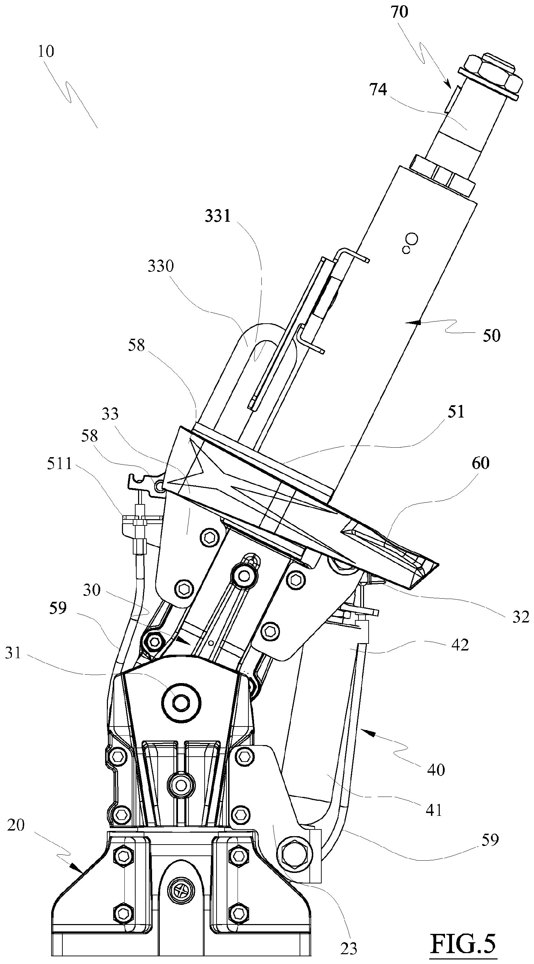

Figure 5 is a side view of the steering column in an inclined configuration with respect to an oscillation axis and lowered.

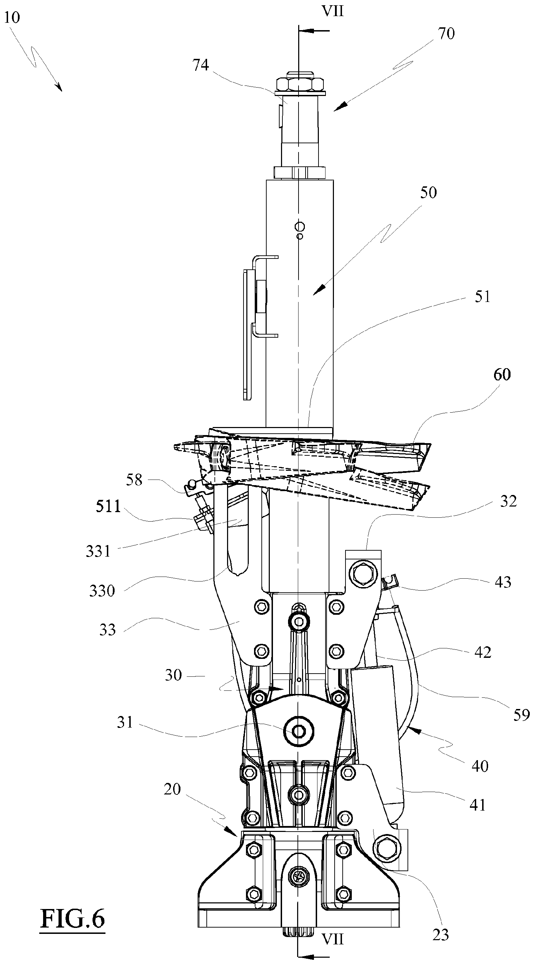

Figure 6 is a side view of the steering column in a straight configuration with respect to an oscillation axis and lifted.

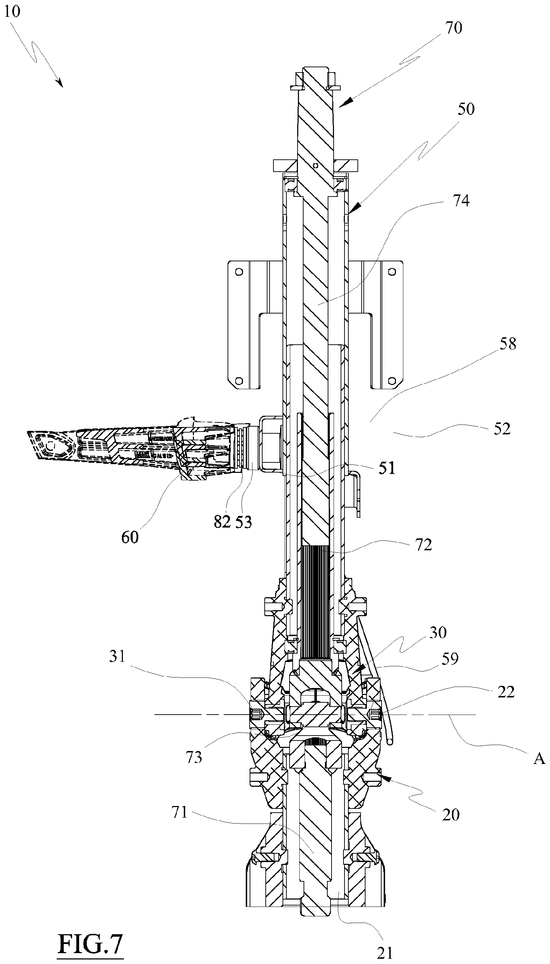

Figure 7 is a section view along the section line VII-VII of figure 6.

### BEST EMBODIMENT OF THE INVENTION

With particular reference to such figures, reference numeral 10 globally indicates a steering column for vehicles, for example heavy vehicles such as farming vehicles.

The steering column 10 comprises a base block 20 for example able to be fixed, through threaded members, to the vehicle.

The base block 20, for example, is substantially internally hollow and comprises a cylindrical cavity 21, for example of the cylindrical tube type.

The base block 20 could have different heights depending on requirements. The base block 20 comprises, for example, a cylindrical seat 22 that is transversal (for example perpendicular) with respect to the axis of the cylindrical cavity 21.

For example, the cylindrical seat 22 passes right through the shell of the base block 20.

On the base block 20 a first ear 23 is also made, for example projecting in a substantially radial direction outside of the base block itself, in an undercut position with the cylindrical seat 22.

The steering column 10 also comprises an intermediate part 30, which is connected to the base block 20 with respect to a single degree of rotational freedom.

The intermediate part 30 for example comprises a substantially cylindrical body, for example having variable section along the axis (from an enlarged lower end to a tapered upper end).

The intermediate part 30 is for example substantially hollow and has a substantially cylindrical inner cavity.

In particular, the intermediate part 30 is hinged, for example at its lower end, to the base block 20 with respect to a rotation axis A perpendicular to the axis of the cylindrical cavity 21.

In particular, the intermediate part 30 supports a hinge pin 31, which is received in the cylindrical seat 22 of the base block 20.

The hinge pin 31 at the same time allows the oscillation of the intermediate part 30 with respect to the base block 20 around the rotation axis A.

The intermediate part 30 in practice is adapted for being oscillated with respect to the base block alternately between an alignment configuration, in which the axis of the inner cavity 21 of the base block 20 coincides with the central axis of the intermediate part 30, and a misaligned configuration, in which the axis of the inner cavity 21 of the base block 20 cuts the central axis of the intermediate part 30, for example with an acute angle, for example comprised between - 20° and + 40° (positives indicating the angles inclined towards the driver) with respect to the alignment configuration preferably d between 0° and 30° or between -15° and + 30°, or in any case configurable according to requirements.

The intermediate part 30, for example, comprises a second ear 32, for example projecting in a substantially radial direction outside of the intermediate part itself in an undercut position with the hinge pin 31 (received in the cylindrical seat 22).

The second ear 32 substantially overlaps the first ear 23 along a plane perpendicular to the cylindrical seat 22 and passing through the axis of the inner cavity 21.

The steering column 10 comprises a locking group of the mutual rotation between the intermediate part 30 and the base block 20 with respect to the rotation axis A.

In particular, between the intermediate part 30 and the base block 20 a gas spring 40 is arranged (defining such a locking group), which is configured to exert an elastic thrust between the intermediate part 30 and the base block 20, for example directed towards the alignment configuration thereof.

The gas spring 40 comprises a cylinder 41 hinged to the base block 20, for example at the first ear 23.

Moreover, the gas spring 40 comprises a stem 42 slidably inserted in the cylinder 41 and hinged to the intermediate part 30, for example at the second ear 32.

The stem 42 supports a piston (not visible in the figures) arranged inside the cylinder 41 for the pneumatic actuation, by means of a fluid, for example a (compressible) gas, of the stem 42 from a retracted configuration to an extracted configuration from the cylinder 41.

The gas spring 40 comprises a control element 43, for example arranged at the stem 42, preferably at an end thereof distal from the cylinder 41, which is able to be selectively actuated between a (raised) stop position, in which it stops the sliding of the stem 42 in a certain axial position (arranged between the retracted configuration and the extracted configuration, including extreme conditions) with respect to the cylinder 41, and a (lowered) unlocked position, in which it frees the sliding of the stem 42 with respect to the cylinder 41. The control element 43 comprises for example a lever, for example of the choke type, rotatably coupled with the stem 42 and able to be operated in rotation by a predetermined angle for the passage from the stop position to the unlocked position.

The intermediate part 30 also comprises a third ear 33, for example projecting in a substantially radial direction outside of the intermediate part itself in an undercut position with the hinge pin 31.

The third ear 33 comprises an elongated body 330 in the axial direction with respect to the intermediate part 30 and extends in the opposite direction to the base block 20 beyond the intermediate part 30 of a projecting portion of determined length, for example greater than the axial length of the intermediate part itself.

The third ear 33, for example at the elongated body 330, comprises an elongated through slot 331 with the longitudinal axis parallel to the axis of the intermediate body 30.

The through slot 331 has, for example, a determined length substantially comprised between 10 mm and 80 mm, preferably equal to 70 mm or in any case able to be variously sized according to requirements.

The steering column 10 also comprises an upper part 50, which is connected to the intermediate part 30, for example in a slidable manner with respect to a sliding direction parallel to the axis of the intermediate part 30 itself.

The upper part 50 comprises, for example, a cylindrical body, for example also hollow (equipped with a cylindrical inner cavity), which is connected coaxially to the intermediate part 30.

The upper part 50 and the intermediate part 30 for example define a connection of the telescopic type, for example prismatic.

In practice, the upper part 50 is connected to the intermediate part 30 with respect to a single degree of translational freedom, additional with respect to the degree of rotational freedom described above, of the upper part 50 with respect to the base block 20.

For example, the upper part 50 is slotted inside the inner cavity of the intermediate part 30.

The upper part 50 comprises a resolvable friction locking group which is configured to resolvably lock the mutual sliding between the upper part 50 and intermediate part 30.

For example, the friction locking group comprises a support bracket 51 for example projecting outside of the upper part 50 itself and fixed to it.

The support bracket 51 comprises, for example, a through hole 510, for example facing at least one portion of the through slot 331.

The support bracket 51 is adapted for supporting an actuation pin 52, which has a longitudinal axis perpendicular with respect to the axis of the upper part 50.

The actuation pin 52 is substantially cylindrical and its longitudinal axis coincides with the axis of the actuation pin itself.

The actuation pin 52 is for example slidably connected to the support bracket 51, for example inserted inside the through hole 510.

The actuation pin 52 is for example also slotted inside the through slot 331 of the intermediate part 30, so as to be able to slide axially along it, between two end stop positions (lower and upper) defined by the axially opposite walls of the through slot itself, during the sliding of the upper part 50 with respect to the intermediate part 30.

The actuation pin 52 is axially divided in an ideal manner so as to have a first extreme portion projecting from an opposite side of the through hole 510 with respect to the through slot 331, an intermediate portion arranged between the through hole 510 and the through slot 331 and a second extreme portion projecting from a side of the through slot 331 opposite to the through hole 510.

A first friction member 54 of the friction locking group, for example one or more springs, for example cup springs, is fitted (slidably in the axial direction of the actuation pin 52) on the intermediate portion. The first friction member 54 is substantially axially arranged between the elongated body 330 (that surrounds the through slot 331) and a portion of the bracket 51 that surrounds the through hole 510.

A second friction member 55 of the friction locking group, for example one or more springs, for example cup springs, is fitted (slidably in the axial direction of the actuation pin 52) on the second extreme portion.

Each of the first friction member 54 and/or the second friction member 55 is rotatably associated (idly, with low friction) with respect to the actuation pin 52, for example with respect to the longitudinal/central axis thereof.

The friction locking group is equipped with a control member able to be selectively actuated between a closed position, in which it stops the sliding of the upper part 50 with respect to the intermediate part 30, and an open position, in which it frees the sliding of the upper part 50 with respect to the intermediate part 30.

In particular, the control member comprises a cylindrical tube 53 with which the actuation pin 52 is slidably associated, which is for example fitted on the first extreme portion of the actuation pin 52, with low radial clearance. The actuation pin 52 is therefore movable along an axial sliding direction of the cylindrical tube 53 itself.

The cylindrical tube 53 in practice is fixed to the support bracket 51 at the through hole 510 and axially and radially extends the dimensions thereof so as to be able to slidably support the actuation pin 52.

The actuation pin 52 is rotatably associated with the cylindrical tube 53 (idly, with low friction), for example with respect to the longitudinal/central axis of the same actuation pin 52.

Moreover, the control member also comprises a pressure body 56 substantially axially constrained to the actuation pin 52, for example fitted on the second extreme portion; the pressure body comprises for example a disc-shaped body, which is adapted for pressing on the second friction member 55 which is thus arranged between the pressure body 56 and the elongated body 330 (i.e. the portion thereof that surrounds the through slot 331).

The pressure body 56 is for example constrained in rotation to the actuation pin 52 (for example it is fitted onto it), so as to rotate as a unit with the actuation pin 52

The pressure body 56 and the cylindrical tube 53 can be actuated towards and away from one another, as will be described more clearly hereinafter, respectively for closing (compression) and opening (release) the first friction member 54 and the second friction member 55.

When the first friction member 54 and the second friction member 55 are in closed position the sliding of the upper part 50 with respect to the intermediate part 30 is stopped by the friction between the first friction member 54 and the elongated body 330 and between the second friction member 55 and the elongated body 330.

When the first friction member 54 and the second friction member 55 are in open position the sliding of the upper part 50 with respect to the intermediate part 30 is permitted by a drop, by a predetermined settable value, of the friction between the first friction member 54 and the elongated body 330 and between the second friction member 55 and the elongated body 330.

When the first friction member 54 and the second friction member 55 are in open position the friction between the first friction member 54 and the elongated body 330 and between the second friction member 55 and the elongated body 330 could be substantially non-zero, i.e. it could be determined so as to prevent the spontaneous sliding of the upper body 50 with respect to the intermediate body 30.

In practice, when the first friction member 54 and the second friction member 55 are in open position the force generated by the friction between the first friction member 54 and the elongated body 330 and between the second friction member 55 and the elongated body 330 is greater than the weight force acting on the upper body 50 and less than a preset value, so as to be able to be overcome by a manual traction or pushing action exerted on the upper part 50.

In practice, the distance between the pressure body 56 and the cylindrical tube 53 in the open position is sized so that, in such an open position, the friction between the first friction member 54 and the elongated body 330 and between the second friction member 55 and the elongated body 330 is substantially not zero, i.e. is determined so as to prevent the spontaneous sliding of the upper body 50 with respect to the intermediate body 30.

The actuation pin 52, at the extreme portion thereof projecting from the cylindrical tube 53, comprises a further pin 57, for example undercut with respect to the longitudinal axis of the actuation pin 52 (parallel to the longitudinal axis of the upper part 50).

On the actuation pin 52 there are rolling means 80 configured to make the rotation of the actuation pin 52 free with respect to its axis of revolution defined by the (central) longitudinal axis thereof.

For example, the rolling means 80 are configured to make the rotation of the actuation pin 52 free inside a cylindrical seat defined by the cylindrical tube 53.

In the example, the rolling means 80 comprise a first bearing 81, which is for example fitted (with radial clearance) on the actuation pin 52.

The first bearing 81 is for example axially arranged between the first friction member and the further pin 57 (for example distanced from it).

For example, the first bearing 81 is slidably associated with the actuation pin 52, along the longitudinal axis thereof.

For example, the first bearing 81 is fitted on a cylindrical tang branching from the cylindrical tube 53 (made in one piece with it) towards the further pin 57. The first bearing 81 is for example a thrust bearing.

For example, the first bearing 81 is a rolling bearing, for example a ball bearing.

This does not rule out the possibility of the first bearing 81 being a sliding bearing.

In the example, an annular track of the first bearing 81 rotates (at least in use) as a unit with the cylindrical tube 53 (at an annular shoulder defined between the cylindrical tang - with lower outer diameter - and the cylindrical tube 53 - with greater outer diameter) and the other annular track is free, i.e. rotates idly with respect to the first annular track and defines a free axial support surface.

In the example, the rolling means 80 comprise a second bearing 82, which is for example fitted on the actuation pin 52.

The second bearing 82 is for example axially arranged between the second friction member 55 and the pressure body 56, for example in direct contact with them.

For example, the second bearing 82 is associated so as to rotate as a unit with the actuation pin 52, along the longitudinal axis thereof.

The second bearing 82 is for example a thrust bearing.

For example, the second bearing 82 is a rolling bearing, for example a ball bearing.

This does not rule out the possibility of the second bearing 82 being a sliding bearing.

In the example, an annular track of the second bearing 82 is fixedly associated with the pressure body 56 (for example is set in rotation by it or is fitted on the actuation pin 52) and the other annular track is free, i.e. it rotates idly with respect to the first annular track (and to the actuation pin) and defines a free axial support surface for the second friction member 55, i.e. for an end portion thereof.

This does not rule out the possibility of the first bearing 81 and the second bearing 82 being arranged in an equivalent manner in other axial points of the actuation pin 52 for the same purposes of making the free rotation of the actuation pin 52 with respect to the cylindrical tube 53 possible, both in the open position and in the closed position.

The steering column 10 comprises an actuation lever 60 connected to the upper part 30 which can be operated between a locked position, in which the actuation lever is in stable equilibrium and constrains both of the degrees of freedom of the upper part 50 with respect to the base block 20, in particular the degree of translational freedom between the upper part 50 and the intermediate part 30 and the degree of rotational freedom between the intermediate part 30 and the base block 20, and two distinct unlocked positions, in each of which it respectively frees one of the two degrees of freedom of the upper part 50 with respect to the base block 20 (i.e. respectively the degree of translational freedom between the upper part 50 and the intermediate part 30 and the degree of rotational freedom between the intermediate part 30 and the base block 20). The actuation lever 60 is for example adapted for operating on the actuation pin 52, as will be described more clearly hereinafter.

In particular, the actuation lever 60 is hinged to the actuation pin 52 with respect to a first oscillation axis B perpendicular to the longitudinal axis (of revolution) of the actuation pin 52 (perpendicular to the translation axis of the upper part 50 with respect to the intermediate part 30).

For example, the actuation lever 60 is hinged to the actuation pin 52 by means of the further pin 57.

The actuation lever 60 comprises, at the end constrained to the actuation pin 52, a cam 61 equipped with an eccentric profile with respect to the first oscillation axis B.

The cam 61, for example, has an enlarged area arranged at a certain angle, for example substantially undercut, with respect to the first oscillation axis B defined by a tapered area.

In practice, the enlarged area defines an eccentric area located on an arc centred on the first oscillation axis B having a distance from the first oscillation axis B greater than the eccentric area located on another arc centred on the first oscillation axis B defined by the tapered area.

Between the enlarged area and the tapered area it is possible to circumferentially arranged a step (bevelled or rounded) that define an unstable area of the actuation lever 60 that sets the actuation lever 60 in rotation towards one or other stable equilibrium position thereof, i.e. towards a position in which the tapered area or the enlarged area is undercut with the axis of the actuation pin 52, actually preventing the actuation lever 60 from stably occupying an intermediate position between the locked position and the first unlocked position along the oscillation with respect to the first oscillation axis B.

The cam 61 is adapted for making contact, selectively with its enlarged area or its tapered area, with an end of the first bearing 81, i.e. with its free axial surface, during an oscillation by a certain angle (equal to the angle that separates the tapered area from the enlarged area of the cam 61) of the actuation lever 60 with respect to the first oscillation axis B. Advantageously, the actuation lever 60 is connected to the control member (for example to the cylindrical tube 53 and to the pressure body 56) for the actuation in mutual sliding between the cylindrical tube 53 and the pressure body 56, selectively between the closed position and the open position, respectively in the locked position of the actuation lever 60, in which the enlarged area of the cam 61 makes contact with the first bearing 81 and first, the cylindrical tube 53 consequently pulling through the first bearing the pressure body 56 towards the cylindrical tube 53 (in the closed position of the control member), and in a first unlocked position of the actuation lever 60, in which (having rotated with respect to the first oscillation axis B) the tapered area of the cam 61 making contact with the first bearing 81 with less traction leaves the pressure body 56 free to slide, by means of the elastic force of the first friction member 54 and of the second friction member 55, away from the cylindrical tube 53 (in the open position of the control member).

The enlarged area of the cam 61 has a profile substantially matching the profile of the portion of the first bearing 81 with which it makes contact, for example substantially planar, in such a way the actuation lever 60, in its locked position, is in a stable equilibrium position, i.e. remains firmly in such a position if not biased.

The tapered area of the cam 61 has a profile substantially matching the profile of the portion of the first bearing 81 with which it comes into contact, for example substantially planar, in such a way the actuation lever 60, in its first unlocked position is in a stable equilibrium position, i.e. remains firmly in such a position if not biased. The spontaneous (downward) translation movement of the actuation lever 60 in such a first unlocked position is also prevented by the residual friction between the first friction member 54 and the elongated body 330 and between the second friction member 55 and the elongated body 330 in open position.

In practice, by actuating the actuation lever 60 from the locked position to the first unlocked position (making it oscillate with respect to the first oscillation axis B by the predetermined angle) the friction locking group is taken from the closed position to the open position and, therefore, the degree of translational freedom of the upper part 50 is unconstrained with respect to the base block 20.

The actuation pin 52 (and/or the actuation lever 60) comprises an eccentric portion 58 (eccentric with respect to the longitudinal central axis of the actuation pin 52 itself), which for example is defined by a lever fitted on the actuation pin 52 and projecting radially from it for example in a radial direction. The eccentric portion 58 is for example fixed (axially and in rotation) to the second extreme portion of the actuation pin 52, for example outside of the pressure body 56.

The eccentric portion 58 is for example juxtaposed in plan (at a distance) over a limb 511 of the support bracket 51.

Both the eccentric portion 58 and the limb 511 have for example a respective laterally open through hole substantially aligned with each other.

The actuation lever 60, being connected through the further pin 57, to the actuation pin 52, is rotatably connected to the upper part 50 with respect to a second oscillation axis C coinciding with the longitudinal central axis of the actuation pin 52, which can rotate inside the through hole 510 (of the cylindrical tube 53).

An oscillation of the actuation lever 60 and, therefore, of the eccentric portion 58 (rotating as a unit with it), with respect to the second oscillation axis C (in one direction of rotation or the other) is such as to selectively take the eccentric portion 58 away from and towards the limb 511.

The eccentric portion 58 is connected through a traction cable 59, for example a sheathed Bowden cable, to the control element 43 of the gas spring 40 for the actuation of the control element 43 itself selectively between its stop position and its unlocked position, following an oscillation of the eccentric portion 58 with respect to the second oscillation axis C by a certain set oscillation angle.

In particular, the sheath of the sheathed traction cable 59 is fixed to the opposite ends of the limb 511 (at the laterally open through hole thereof) and to a fixed bracket associated beneath the control element 43 of the gas spring 40 and the cable of the sheathed traction cable 59 is fixed to the opposite ends of the eccentric portion 58 (at the laterally open through hole thereof) and to the control element 43 of the gas spring 40.

The unlocking of the constraint to the rotation of the intermediate part 30 (i.e. of the upper part 50) with respect to the base block 20 around the rotation axis A can be carried out as follows.

A rotation of the actuation lever 60 with respect to the second oscillation axis C between the locked position and a second unlocked position, in which it is rotated by an angle (for example acute), for example downwards, causes a mutual separation between the eccentric portion 58 with respect to the limb 511.

In particular, the cable of the sheathed traction cable 59 is put under traction and the control member 43 of the gas spring 40 is taken from the stop position to the unlocked position, unlocking the control member 43 of the gas spring 40 that will thus allow the adjustment of the inclination, with respect to the rotation axis A, of the intermediate part 30 (and therefore of the upper part 50) with respect to the base block 20, for example in contrast to the action of the control spring 43.

The actuation lever 60, in its second unlocked position, is in an unstable position, i.e. is pushed towards a different position, in particular towards a locked position that takes the control member 43 of the gas spring 40 into the stop position if not biased, i.e. if the actuation lever 60 is released by the operator. In practice, the actuation lever 60 spontaneously goes back (as will be explained hereinafter) into its locked position, distinct from the second unlocked position, when not perturbed or biased by a user.

In fact, the actuation lever 60 has infinite locked positions (of substantial stable equilibrium, at least with respect to the oscillation around the second oscillation axis C), in which the oscillation of the intermediate part 30 (i.e. of the upper part 50) with respect to the base block 20 around the rotation axis A is inhibited/blocked (as a function of the position of the actuation lever 60 along the oscillation arc with respect to the first oscillation axis B), such locked positions are all ideally aligned along an arc of circumference (they lie on a single plane) and are crossed by the actuation lever 60 during the oscillation thereof around the first oscillation axis B.

Moreover, the actuation lever 60 has infinite second unlocked positions (unstable), in which the oscillation of the intermediate part 30 (i.e. of the upper part 50) with respect to the base block 20 around the rotation axis A is allowed/unlocked (as a function of the position of the actuation lever 60 along the oscillation arc with respect to the first oscillation axis B), such second unlocked positions are all ideally aligned along an arc of circumference (they lie on a single plane inclined with respect to the plane in which the infinite locked positions lie).

In practice, the spontaneous rotation of the actuation lever 60 in (any) first unlocked position is (also) allowed by the rolling means 80 that reduce the friction between the second friction member 55 and the pressure body 56 and between the actuation lever 60 (one from the tapered area and the enlarged area thereof) and the cylindrical tube 53, irrespective of the position of the actuation lever 60 with respect to the first oscillation axis B thereof.

The steering column 10 comprises, in particular, return means adapted for exerting a non-zero thrusting (or traction) force on the actuation lever 60, so that this is pushed (or pulled), for example constantly and permanently, from (any) second unlocked position (unstable) thereof towards (any) locked position thereof, where it is in stable equilibrium.

In particular, the return means are configured so as to exert on the actuation lever 60 a force greater than the friction in play that counteract the revolution of the actuation pin 52 with respect to the second oscillation axis C.

In practice, the rolling means 80 are configured so that the resistance to rolling of the actuation pin 52 with respect to the second oscillation axis C is less than the force exerted by the return means on the actuation lever 60 (and thus on the actuation pin itself).

The actuation lever 60 is movable in oscillation around the second oscillation axis C, by manual action, from (any) locked position thereof towards (any) unlocked position thereof in contrast to the force exerted by the return means.

In practice, whenever the actuation lever 60 is actuated in rotation around the second oscillation axis C from (any) locked position thereof towards (any) unlocked position thereof, the operator must overcome (substantially exclusively) the force exerted by the return means that oppose such an oscillation and, when the operator releases the actuation lever 60 (i.e. the force that overcomes the force exerted by the return means stops), the force exerted by the return means is, by itself, such as to allow the spontaneous (contrary) oscillation of the actuation lever 60 from (any) unlocked position thereof towards (any) locked position thereof, in fact automatically taking the control member 43 of the gas spring 40 back into its stop position.

The return means are for example elastic return means, for example adapted for exerting an elastic force.

This does not rule out the possibility of the return means being of a different kind according to requirements, for example they could be magnetic.

The elastic return means comprise for example a spring 590.

The spring for example is a compression spring.

In the example, the spring is a helical spring.

For example, the spring 590 is arranged (indirectly or directly) between the actuation lever 60, preferably the eccentric portion 58 rotating as a unit with it, and the upper part 50, preferably the limb 511.

In practice, the spring 590 exerts the (elastic) force in contrast to the bringing together (or pushes apart) the eccentric portion 58 with respect to the limb 511, when the actuation lever 60 is rotated around the second oscillation axis C from (any) locked position towards (any) unlocked position.

The spring 590, for example, is defined integral to the traction cable 59 (Bowden cable). In practice, the spring 590 is fitted on the cable of the traction cable 59 and is arranged inside the sheath of the traction cable 59.

In practice, when an end of the cable of the traction cable 59 is pulled towards the outside of a respective end of the sheath of the traction cable 59, with respect to an undeformed configuration thereof, the traction action is in contrast to the resistant force of the spring 590, which will tend to elastically oppose this traction and take the traction cable 59 back into the undeformed configuration upon release of the perturbing force.

This does not rule out the possibility of the spring being defined outside of the traction cable 590, for example being a spring arranged directly between the limb 511 and the eccentric portion 58.

Furthermore, it is possible to foresee for the spring to be able to be a leaf spring or cup spring or flexion spring.

In fact, by actuating the actuation lever 60 from the locked position to the second unlocked position (making it oscillate with respect to the second oscillation axis C by the predetermined angle) the control element 43 of the gas spring 40 is brought from the stop position to the unlocked position and, therefore, the degree of rotational freedom of the upper part 50 is unconstrained with respect to the base block 20.

In practice, indeed, the rotation of the actuation lever 60 around the second oscillation axis C from the locked position to the second unlocked position causes the mutual separation between the eccentric portion 58 with respect to the limb 511 and, therefore, the release of the control element 43 of the gas spring 40 and, with it, the traction of the cable of the traction cable 59 in contrast to the spring 590.

The locking of the constraint to the oscillation of the intermediate part 30 (i.e. of the upper part 50) with respect to the base block 20 around the rotation axis A can be carried out by releasing the actuation lever 60, which spontaneously goes into reverse rotation with respect to the second oscillation axis C by means of the force exerted by the return means, i.e. the spring 590, from the second unlocked position to the locked position.

In practice, the spring 590, overcoming the low rolling friction between the tracks of the first bearing 81 and of the second bearing 82, takes the cable of the traction cable 59 back into its undeformed position and pushes together the eccentric portion 58 with respect to the limb 511 and, therefore, releases the control element 43 of the gas spring 40.

For example, the actuation lever 60 can comprise a first (flat) surface, for example at an end thereof distal from the first oscillation axis B, substantially parallel to the first oscillation axis B itself.

Such a first surface is adapted for being contacted by a driver of the vehicle for the actuation of the oscillation of the actuation lever 60 with respect to the first oscillation axis B between the locked position and the first unlocked position.

For example, the actuation lever 60 can comprise a second (flat) surface, for example at an end thereof distal from the second oscillation axis C, substantially parallel to the second oscillation axis C itself.

Such a second surface is adapted for being contacted by the driver for the actuation of the oscillation of the actuation lever 60 with respect to the second oscillation axis C between the locked position and the second unlocked position.

The steering column 10 also comprises a steering axle 70, which is contained inside the upper part 50, of the intermediate part 30 and of the base block 20, for example slotted with clearance inside the respective inner cavities and supported in rotation with respect to them by suitable rolling members, for example bearings, for example radial (ball bearings).

In particular, the steering axle 70 comprises a lower axle 71, which is slotted (axially locked) coaxially inside the inner cavity of the base block 20 and is rotatable with respect to a rotation axis coaxial to it (axially locked).

A lower end (for example projecting at the bottom from the base block 20) of the lower axle 71, for example grooved, can be connected to a motion transmission group to a steering axle of the vehicle, preferably a hydrostatic steering group (hydraulic power steering).

The steering axle 70 also comprises an intermediate axle 72, which is slotted (axially locked) coaxially inside the inner cavity of the intermediate part 30 and is rotatable with respect to a rotation axis coaxial to it.

The intermediate axle 72 and the lower axle 71 are connected together through a joint 73, for example a cardan joint, which allows the transfer of rotary motion from the intermediate axle 72 to the lower axle 71 also following an inclination of the intermediate part 30 with respect to the base block 20 around the rotation axis A.

The steering axle 70 also comprises an upper axle 74, which is slotted (axially locked) coaxially inside the inner cavity of the upper part 50 and is rotatable with respect to a rotation axis coaxial to it.

The upper axle 74 is slidably connected, for example telescopically, to the intermediate axle 72, for example made to slide by the sliding of the upper part 50 with respect to the intermediate part 30.

An upper end (for example projecting at the top from the upper part 50) of the upper axle 74 can be connected, for example rigidly, to a steering wheel for the actuation in rotation of the steering axle 70 with respect to the upper part 50, to the intermediate part 30 and to the base block 20 for steering the vehicle.

The invention thus conceived can undergo numerous modifications and variants all of which are covered by the inventive concept.

Moreover, all of the details can be replaced by other technically equivalent elements.

In practice, the materials used, as well as the contingent shapes and sizes, can be whatever according to the requirements without for this reason departing from the scope of protection of the following claims.

## Claims

1. A steering column (10) comprising:
- a base block (20);
- an upper part (50) connected to the base block (20), wherein the upper part (50) is movable with respect to the base block (20) with respect to two distinct degrees of freedom;
- an actuation lever (60) connected to the upper part (50) and operable between a locked position, wherein the actuation lever (60) is in stable equilibrium and constrains both of the degrees of freedom of the upper part (50) with respect to the base block (20), and two distinct unlocked positions, in each of which it respectively frees one of the two degrees of freedom of the upper part (50) with respect to the base block (20);
- wherein in one of the two unlocked positions the actuation lever (60) is in an unstable position, wherein the actuation lever (60) is pushed by return means from the unstable position, wherein it frees one of said degrees of freedom, towards a stable equilibrium position wherein the same degree of freedom is constrained;
- wherein the actuation lever (60)
is rotatably connected with respect to the upper part (50) with respect to a first oscillation axis (B) and is operable in oscillation about the first oscillation axis (B) alternately between two distinct angular positions distanced by a predetermined oscillation angle, a first angular position of which defines the locked position and a second angular position defines a first position of the two unlocked positions for a first degree of freedom of said two degrees of freedom; **characterized in that** the actuation lever (60) is rotatably connected with respect to the upper part (50) with respect to a second oscillation axis (C) and is operable in oscillation about the second oscillation axis (C) alternately between two distinct angular positions, a first angular position of which defines the locked position and a second angular position defines the unstable position of the two unlocked positions for a second degree of freedom of said two degrees of freedom;
wherein the first oscillation axis (B) and the second oscillation axis (C) are inclined with respect to one another.

2. The steering column (10) according to claim 1, wherein the return means are elastic return means.

3. The steering column (10) according to claim 1, wherein the first degree of freedom is a degree of translational freedom.

4. The steering column (10) according to claim 1, wherein the second degree of freedom is a degree of rotational freedom.

5. The steering column (10) according to claim 1, wherein the first oscillation axis (B) and the second oscillation axis (C) are perpendicular to one another.

6. The steering column (10) according to claim 1, wherein between the base block (20) and the upper part (50) an intermediate part (30) is arranged, the upper part (50) is slidably connected to the intermediate part (30) defining a first degree of translational freedom of the upper part (50) with respect to the base block (20).

7. The steering column (10) according to claim 6, wherein between the upper part (50) and the intermediate part (30) a friction locking group (54,55) is arranged that is equipped with a control member (53,56) able to be selectively actuated between a closed position, wherein it stops the sliding of the upper part (50) with respect to the intermediate part (30), and an open position, wherein it frees the sliding of the upper part (50) with respect to the intermediate part (30);
and wherein the actuation lever (60) is connected to the control member (53,56) for the actuation thereof selectively between the closed position and the open position, respectively in the locked position of the actuation lever (60) and in a first position of the two unlocked positions thereof.

8. The steering column (10) according to claim 7, wherein the actuation lever (60) is rotatably connected with respect to the upper part (50) with respect to a first oscillation axis (B) and comprises a cam (61) equipped with an eccentric profile with respect to the first oscillation axis (B) and adapted for actuating the control member (53,56) selectively between the closed position and the open position following an oscillation of the cam (61) with respect to the first oscillation axis (B) by a certain oscillation angle.

9. The steering column (10) according to any one of the previous claims, wherein between the base block (20) and the upper part (50) an intermediate part (30) is arranged, the intermediate part (30) is rotatably connected to the base block (20) defining a second degree of rotational freedom of the upper part (50) with respect to the base block (20).

10. The steering column (10) according to claim 6 and 9, wherein the intermediate part (30) is hinged to the base block (20) with respect to a rotation axis (A) perpendicular to a sliding direction of the upper part (50) with respect to the intermediate part (30).

11. The steering column (10) according to one claims 9 to 10, wherein between the intermediate part (30) and the base block (20) a gas spring (40) is arranged, comprising:
- a cylinder (41) hinged to one from the base block (20) and the intermediate part (30);
- a stem (42) slidably connected to the cylinder (41) and hinged to the other from the intermediate part (30) and the base block (20); and
- a control element (43) able to be selectively actuated between a stop position, wherein it stops the sliding of the stem (42) with respect to the cylinder (41), and an unlocked position, wherein it frees the sliding of the stem (42) with respect to the cylinder (41);
and wherein the actuation lever (60) is connected to the control element (43) for the actuation thereof selectively between the stop position and the unlocked position, respectively in the locked position of the actuation lever (60) and in the unstable position of the two unlocked positions thereof.

12. The steering column (10) according to claim 11, wherein the actuation lever (60) is rotatably connected with respect to the upper part (50) with respect to a second oscillation axis (C) and comprises at least one eccentric portion (58) with respect to the second oscillation axis (C) to which the control element is connected (43) through a traction cable (59), for the actuation of the control element (43) selectively between the stop position and the unlocked position following an oscillation of the eccentric portion (58) with respect to the second oscillation axis (C) by a certain oscillation angle.

13. The steering column (10) according to claim 12, wherein the traction cable (59) comprises a sheathed Bowden cable.

14. The steering column (10) according to claim 12 or 13, wherein the return means are integrated in the traction cable (59).

## Patentansprüche

1. Lenksäule (10), Folgendes umfassend:
- einen Basisblock (20),
- ein oberes Teil (50), das mit dem Basisblock (20) verbunden ist, wobei das obere Teil (50) im Verhältnis zum Basisblock (20) in Bezug auf zwei einzelne Freiheitsgrade beweglich ist,
- einen Betätigungshebel (60), der mit dem oberen Teil (50) verbunden ist und zwischen einer arretierten Position, in der sich der Betätigungshebel (60) in stabilem Gleichgewicht befindet und beide Freiheitsgrade des oberen Teils (50) im Verhältnis zum Basisblock (20) festsetzt, und zwei einzelnen nicht arretierten Positionen, von denen jede einen der zwei Freiheitsgrade des oberen Teils (50) in Bezug auf den Basisblock (20) entsprechend freigibt, funktionsfähig ist,
- wobei sich der Betätigungshebel (60) in einer der zwei nicht arretierten Positionen in einer instabilen Position befindet, wobei der Betätigungshebel (60) durch Rückstellmittel aus der instabilen Position, in der er einen der Freiheitsgrade freigibt, in eine stabile Gleichgewichtsposition gedrückt wird, in der derselbe Freiheitsgrad festgesetzt ist,
- wobei der Betätigungshebel (60) in Bezug auf das obere Teil (50) in Bezug auf eine erste Schwingungsachse (B) drehbar verbunden und funktionsfähig ist, abwechselnd zwischen zwei einzelnen Winkelpositionen, die um einen festgelegten Schwingungswinkel beabstandet sind, um die erste Schwingungsachse (B) zu schwingen, wobei eine erste Winkelposition die arretierte Position definiert und eine zweite Winkelposition eine erste Position der zwei nicht arretierten Positionen für einen ersten Freiheitsgrad der zwei Freiheitsgrade definiert,
**dadurch gekennzeichnet, dass** der Betätigungshebel (60) in Bezug auf das obere Teil (50) in Bezug auf eine zweite Schwingungsachse (C) drehbar verbunden und funktionsfähig ist, abwechselnd zwischen zwei einzelnen Winkelpositionen um die zweite Schwingungsachse (C) zu schwingen, wobei eine erste Winkelposition die arretierte Position definiert und eine zweite Winkelposition die instabile Position der zwei nicht arretierten Positionen für einen zweiten Freiheitsgrad der zwei Freiheitsgrade definiert,
wobei die erste Schwingungsachse (B) und die zweite Schwingungsachse (C) im Verhältnis zueinander geneigt sind.

2. Lenksäule (10) nach Anspruch 1, wobei die Rückstellmittel elastische Rückstellmittel sind.

3. Lenksäule (10) nach Anspruch 1, wobei der erste Freiheitsgrad ein Translationsfreiheitsgrad ist.

4. Lenksäule (10) nach Anspruch 1, wobei der zweite Freiheitsgrad ein Drehungsfreiheitsgrad ist.

5. Lenksäule (10) nach Anspruch 1, wobei die erste Schwingungsachse (B) und die zweite Schwingungsachse (C) senkrecht zueinander liegen.

6. Lenksäule (10) nach Anspruch 1, wobei zwischen dem Basisblock (20) und dem oberen Teil (50) ein Zwischenteil (30) angeordnet ist, wobei das obere Teil (50) gleitfähig mit dem Zwischenteil (30) verbunden ist, das einen ersten Translationsfreiheitsgrad des oberen Teils (50) in Bezug auf den Basisblock (20) definiert.

7. Lenksäule (10) nach Anspruch 6, wobei zwischen dem oberen Teil (50) und dem Zwischenteil (30) eine Reibungsarretierungsgruppe (54, 55) angeordnet ist, die mit einem Steuerelement (53, 56) ausgestattet ist, das wahlweise zwischen einer geschlossenen Position, in der es das Gleiten des oberen Teils (50) in Bezug auf das Zwischenteil (30) stoppt, und einer offenen Position, in der es das Gleiten des oberen Teils (50) in Bezug auf das Zwischenteil (30) freigibt, betätigt werden kann,
und wobei der Betätigungshebel (60) mit dem Steuerelement (53, 56) verbunden ist, um dieses wahlweise zwischen der geschlossenen Position beziehungsweise der offenen Position in der arretierten Position des Betätigungshebels (60) und in einer ersten Position von dessen zwei nicht arretierten Positionen zu betätigen.

8. Lenksäule (10) nach Anspruch 7, wobei der Betätigungshebel (60) in Bezug auf das obere Teil (50) in Bezug auf eine erste Schwingungsachse (B) drehbar verbunden ist und einen Nocken (61) umfasst, der mit einem in Bezug auf die erste Schwingungsachse (B) exzentrischen Profil ausgestattet und dafür eingerichtet ist, das Steuerelement (53, 56), einem Schwingen des Nockens (61) in Bezug auf die erste Schwingungsachse (B) um einen bestimmten Schwingungswinkel folgend, wahlweise zwischen der geschlossenen Position und der offenen Position zu betätigen.

9. Lenksäule (10) nach einem der vorhergehenden Ansprüche, wobei zwischen dem Basisblock (20) und dem oberen Teil (50) ein Zwischenteil (30) angeordnet ist, wobei das Zwischenteil (30) drehbar mit dem Basisblock (20) verbunden ist und einen zweiten Drehungsfreiheitsgrad des oberen Teils (50) in Bezug auf den Basisblock (20) definiert.

10. Lenksäule (10) nach Anspruch 6 und 9, wobei das Zwischenteil (30) in Bezug auf eine Drehachse (A), die senkrecht zu einer Gleitrichtung des oberen Teils (50) in Bezug auf das Zwischenteil (30) liegt, an den Basisblock (20) angelenkt ist.

11. Lenksäule (10) nach einem der Ansprüche 9 bis 10, wobei zwischen dem Zwischenteil (30) und dem Basisblock (20) eine Gasfeder (40) angeordnet ist, die Folgendes umfasst:
- einen Zylinder (41), der an eines von Basisblock (20) und Zwischenteil (30) angelenkt ist,
- eine Stange (42), die gleitfähig mit dem Zylinder (41) verbunden und an das entsprechende andere von Zwischenteil (30) und Basisblock (20) angelenkt ist, und
- ein Steuerelement (43), das wahlweise zwischen einer Stoppposition, in der es das Gleiten der Stange (42) in Bezug auf den Zylinder (41) stoppt, und einer nicht arretierten Position, in der es das Gleiten der Stange (42) in Bezug auf den Zylinder (41) freigibt, betätigt werden kann,
und wobei der Betätigungshebel (60) mit dem Steuerelement (43) verbunden ist, um dieses wahlweise zwischen der Stoppposition beziehungsweise der nicht arretierten Position in der arretierten Position des Betätigungshebels (60) und in der instabilen Position der zwei nicht arretierten Positionen desselben zu betätigen.

12. Lenksäule (10) nach Anspruch 11, wobei der Betätigungshebel (60) in Bezug auf das obere Teil (50) in Bezug auf eine zweite Schwingungsachse (C) drehbar verbunden ist und mindestens einen in Bezug auf die zweite Schwingungsachse (C) exzentrischen Abschnitt (58) umfasst, mit dem das Steuerelement (43) durch ein Zugseil (59) verbunden ist, um das Steuerelement (43), einer Schwingung des exzentrischen Abschnitts (58) in Bezug auf die zweite Schwingungsachse (C) um einen bestimmten Schwingungswinkel folgend, wahlweise zwischen der Stoppposition und der nicht arretierten Position zu betätigen.

13. Lenksäule (10) nach Anspruch 12, wobei das Zugseil (59) einen ummantelten Bowdenzug umfasst.

14. Lenksäule (10) nach Anspruch 12 oder 13, wobei die Rückstellmittel in das Zugseil (59) integriert sind.

## Revendications

1. Colonne de direction (10) comprenant :
- un bloc de base (20) ;
- un partie supérieure (50) connectée au bloc de base (20), dans laquelle la partie supérieure (50) est mobile par rapport au bloc de base (20) par rapport à deux degrés différents de liberté ;
- un levier d'actionnement (60) connecté à la partie supérieure (50) et actionnable entre une position verrouillée, dans laquelle le levier d'actionnement (60) est en équilibre stable et contraint les deux degrés de liberté de la partie supérieure (50) par rapport au bloc de base (20), et deux positions déverrouillées différentes, dont dans chacune d'entre elles il libère respectivement l'un des deux degrés de liberté de la partie supérieure (50) par rapport au bloc de base (20) ;
- dans laquelle, dans l'une des deux positions déverrouillées, le levier d'actionnement (60) est dans une position instable, dans laquelle le levier d'actionnement (60) est poussé par des moyens de rappel de la position instable, dans laquelle il libère l'un desdits degrés de liberté, vers une position d'équilibre stable dans laquelle le même degré de liberté est contraint ;
- dans laquelle le levier d'actionnement (60) est rotativement connecté par rapport à la partie supérieure (50) par rapport à un premier axe de rotation (B) et est actionnable en oscillation autour du premier axe de rotation (B) alternativement entre deux positions angulaires distinctes séparées par un angle d'oscillation prédéterminé, dont un premier angle angulaire définit la position verrouillée et un second angle angulaire définit une première position des deux positions déverrouillées pour un premier degré de liberté des deux dits degrés de liberté ;
**caractérisée en ce que** le levier d'actionnement (60) est rotativement connecté par rapport à la partie supérieure (50) par rapport à un second axe d'oscillation (C) et est actionnable en oscillation autour du second axe d'oscillation (C) alternativement entre deux positions angulaires distinctes, dont une première position angulaire définit la position verrouillée et une seconde position angulaire définit la position instable des deux positions déverrouillées pour un second degré de liberté des deux dits degrés de liberté ;
dans laquelle le premier axe d'oscillation (B) et le second axe d'oscillation (C) sont inclinés l'un par rapport à l'autre.

2. Colonne de direction (10) selon la revendication 1, dans laquelle les moyens de rappel sont des moyens de rappel élastiques.

3. Colonne de direction (10) selon la revendication 1, dans laquelle le premier degré de liberté est un degré de liberté translationnelle.

4. Colonne de direction (10) selon la revendication 1, dans laquelle le second degré de liberté est un degré de liberté rotationnelle.

5. Colonne de direction (10) selon la revendication 1, dans laquelle le premier axe d'oscillation (B) et le second axe d'oscillation (C) sont perpendiculaires l'un par rapport à l'autre.

6. Colonne de direction (10) selon la revendication 1, dans laquelle, entre le bloc de base (20) et la partie supérieure (50), une partie intermédiaire (30) est placée, la partie supérieure (50) est connectée par coulissement à la partie intermédiaire (30) définissant un premier degré de liberté translationnelle de la partie supérieure (50) par rapport au bloc de base (20).

7. Colonne de direction (10) selon la revendication 6, dans laquelle, entre la partie supérieure (50) et la partie intermédiaire (30), un groupe de verrouillage par friction (54, 55) est placé, qui est doté d'un membre de contrôle (53, 56) pouvant être sélectivement actionné entre une position fermée, dans laquelle il arrête le coulissement de la partie supérieure (50) par rapport à la partie intermédiaire (30), et une position ouverte, dans laquelle il libère le coulissement de la partie supérieure (50) par rapport à la partie intermédiaire (30) ;
et dans laquelle le levier d'actionnement (60) est connecté au membre de contrôle (53, 56) pour l'actionnement de ce dernier sélectivement entre la position fermée et la position ouverte, respectivement dans la position verrouillée du levier d'actionnement (60) et dans une première position des deux positions déverrouillées de ce dernier.

8. Colonne de direction (10) selon la revendication 7, dans laquelle le levier d'actionnement (60) est rotativement connecté par rapport à la partie supérieure (50) par rapport à un premier axe d'oscillation (B) et comprend une came (61) dotée d'un profil excentrique par rapport au premier axe d'oscillation (B) et conçue pour l'actionnement du membre de contrôle (53, 56) sélectivement entre la position fermée et la position ouverte suivant une oscillation de la came (61) par rapport au premier axe d'oscillation (B) selon un certain angle d'oscillation.

9. Colonne de direction (10) selon l'une quelconque des revendications précédentes, dans laquelle, entre le bloc de base (20) et la partie supérieure (50), une partie intermédiaire (30) est placée, la partie intermédiaire (30) est rotativement connectée au bloc de base (20) définissant un second degré de liberté rotationnelle de la partie supérieure (50) par rapport au bloc de base (20).

10. Colonne de direction (10) selon les revendications 6 et 9, dans laquelle la partie intermédiaire (30) s'articule sur le bloc de base (20) par rapport à un axe de rotation (A) perpendiculaire à une direction de coulissement de la partie supérieure (50) par rapport à la partie intermédiaire (30).

11. Colonne de direction (10) selon l'une quelconque des revendications 9 à 10, dans laquelle, entre la partie intermédiaire (30) et le bloc de base (20), un ressort à gaz (40) est placé, comprenant :
- un cylindre (41) articulé sur l'un à partir du bloc de base (20) ou de la partie intermédiaire (30) ;
- une tige (42) connectée par coulissement au cylindre (41) et articulé sur l'autre à partir de la partie intermédiaire (30) et du bloc de base (20) ; et
- un élément de contrôle (43) pouvant être sélectivement actionné entre une position d'arrêt, dans laquelle il arrête le coulissement de la tige (42) par rapport au cylindre (41), et une position déverrouillée, dans laquelle il libère le coulissement de la tige (42) par rapport au cylindre (41) ;
et dans laquelle le levier d'actionnement (60) est connecté à l'élément de contrôle (43) pour l'actionnement de ce dernier sélectivement entre la position d'arrêt et la position déverrouillée, respectivement dans la position verrouillée du levier d'actionnement (60) et dans la position instable des deux positions déverrouillées de ce dernier.

12. Colonne de direction (10) selon la revendication 11, dans laquelle le levier d'actionnement (60) est rotativement connecté par rapport à la partie supérieure (50) par rapport à un second axe d'oscillation (C) et comprend au moins une partie excentrique (58) par rapport au second axe d'oscillation (C) auquel l'élément de contrôle est connecté (43) via un câble de traction (59), pour l'actionnement de l'élément de contrôle (43) sélectivement entre la position d'arrêt et la position déverrouillée suivant une oscillation de la partie excentrique (58) par rapport au second axe d'oscillation (C) selon un certain angle d'oscillation.

13. Colonne de direction (10) selon la revendication 12, dans laquelle le câble de traction (59) comprend un câble Bowden sous gaine.

14. Colonne de direction (10) selon la revendication 12 ou 13, dans laquelle les moyens de rappel sont intégrés dans le câble de traction (59).
